# EUROPÄISCHE PATENTSCHRIFT

(11) **EP 3 856 664 B1**
(45) Veröffentlichungstag und Bekanntmachung des Hinweises auf die Patenterteilung: **28.06.2023**
(21) Anmeldenummer: 19774073.1
(22) Anmeldetag: 16.09.2019
(51) Int. Cl.: B65G 45/12, G01B 5/24, G01B 7/30

(54) **GURTABSTREIFER UND VERFAHREN ZUM BETRIEB EINES GURTABSTREIFERS**
BELT SCRAPER AND METHOD FOR OPERATING A BELT SCRAPER
RACLEUR DE COURROIE ET PROCÉDÉ PERMETTANT DE FAIRE FONCTIONNER UN RACLEUR DE COURROIE

(30) Priorität: 26.09.2018 DE 102018123799
(43) Veröffentlichungstag der Anmeldung: 04.08.2021
(73) Patentinhaber: Kill-Frech, Cornelia, 48329 Havixbeck (DE)
(72) Erfinder: WEIMANN, Claus, 58300 Wetter (DE); KIEL, Martin, 45659 Recklinghausen (DE)
(74) Vertreter: Kalkoff & Partner Patentanwälte mbB
(86) Internationale Anmeldenummer: PCT/EP2019/074729
(87) Internationale Veröffentlichungsnummer: WO 2020/064405

(56) Entgegenhaltungen:
- DE-A1- 10 246 573
- DE-A1- 19 926 184
- DE-A1-102010 002 109
- US-A- 4 768 645
- US-A1- 2007 029 169

## Beschreibung

Die Erfindung betrifft einen Gurtabstreifer und ein Verfahren zu dessen Betrieb.

Gurtabstreifer werden für Fördergurte benutzt, die zur Förderung verschiedenster Fördergüter eingesetzt werden. Durch Anlage eines Abstreifelements an den laufenden Gurt wird daran anhaftendes Fördergut abgestreift.

Es sind verschiedene Arten und Bauweisen von Gurtabstreifern bekannt. Bspw. zeigt die DE 10 2017 114 931 A1 ein Abstreifersystem für den von einer Abwurftrommel gebildeten Umlenkbereich von schnelllaufenden Gurtförderbändern. An einem quer zur Laufrichtung des Gurtförderbandes ausgerichteten Systemträgers sind Abstreifblöcke aus elastischem Material nebeneinander befestigt. Der Systemträger ist über eine Trägerhalterung an beiden Seiten drehbar um eine Träger-Drehachse aufgehängt. Mittels einer Federvorrichtung wird ein vorgebbares Drehmoment aufgeprägt, welches entgegen der Drehrichtung der Abwurftrommel gerichtet ist. Die Träger-Drehachse lässt eine Drehung des Systemträgers um einen solchen Drehwinkel zu, das eine Ausweichbewegung des Systemträgers mitsamt seiner Abstreifblöcke erfolgen kann.

Die WO 2014/106621 A2 beschreibt ein Gurtabstreifermodul für eine Abstreifvorrichtung für den Rücklaufbereich von Förderbändern. Mehrere Gurtabstreifermodule sind auf einem höhenverstellbaren Systemträger montiert. Jedes Modul weist einen Fuß auf, der an dem Systemträger befestigt ist und einen Schneidenträger, an dem eine Abstreiflamelle mit einer Abstreifkante angebracht ist. Jedes Modul weist ferner einen Abstreifkörper mit einem zwei Gelenke aufweisenden Gelenkgehäuse auf. Die Drehachse eines ersten Gelenks verläuft quer zur Laufrichtung des Gurtbandes. Ein zweites Gelenk weist eine Buchse auf, in der der Schneidenträger drehbar gelagert ist und dessen Drehachse längs zur Laufrichtung des Gurtbandes verläuft. Das erste Gelenk ist mit einer Federwinkelmessung und einem Festanschlag für die Auslenkung ausgestattet. In einer Ausgestaltung ist an der Seite des Moduls, an dem die Arretierung angebracht ist, eine Einrichtung zur elektronischen Drehwinkelmessung vorgesehen, die bspw. in die Abdeckkappe integriert werden kann. Die Drehwinkelstellung kann ermittelt, digitalisiert und in ein Signal umgewandelt werden.

Die US 2007/0029169 A1, die die Merkmale des Oberbegriffs der Ansprüche 1 und 10 offenbart, offenbart einen Abstreifer zur Reinigung der Oberfläche eines Fördergurts. Ein Körper des Abstreifers umfasst einen Fuß, der an einem Querträger angebracht ist und ein Abstreifelement, das sich von dem Fuß bis zu einer Abstreifspitze erstreckt. Der Abstreifer umfasst in einem Einsatz eingebettete elektrische Sensoren. In einer Ausführung ist der Querträger mit Abstreifern, einem rotorischen Aktuator und Haltern um eine Achse schwenkbar angeordnet. Ein Linear-Aktuator mit einem Zylinder und Kolben zum pneumatischen oder hydraulischen Betrieb ist an einem Halter und einem stationären Element angeordnet. Ein Aktuator kann einen Positionssensor umfassen, um ein Signal zur Anzeige der Aktuatorposition zu erzeugen, aus dem die Position und der Reinigungswinkel des Abstreifers errechnet werden kann.

Es kann als Aufgabe angesehen werden, einen Gurtabstreifer und ein Betriebsverfahren hierfür vorzuschlagen, die eine möglichst einfache und exakte Ermittlung von Informationen über den Betriebszustand ermöglichen, ohne dabei den Betrieb zu beeinträchtigen. Die Aufgabe wird gelöst durch einen Gurtabstreifer nach Anspruch 1 und ein Betriebsverfahren nach Anspruch 10. Abhängige Ansprüche beziehen sich auf vorteilhafte Ausführungsformen der Erfindung.

Der erfindungsgemäße Gurtabstreifer weist mindestens ein Abstreifelement zur Anlage an einen Gurt auf. Als Abstreifelement kann jede Art und Form eines Körpers verstanden werden, der dazu geeignet ist, an einen Gurt angelegt eine abstreifende Wirkung zu haben. Das Abstreifelement kann bspw. schälend oder nicht-schälend am Gurt anliegen.

Als Kontaktfläche mit dem Gurt ist eine flächige oder linienförmige Anlage bevorzugt. Das Abstreifelement kann bspw. blockförmig ausgebildet sein wie in DE 10 2017 114 931, oder als Lamelle wie in WO 2014/106621 A2. Das Abstreifelement kann aus unterschiedlichen Materialien bestehen, bspw. Kunststoff oder Metall, insbesondere Hartmetall. Insbesondere kann das Abstreifelement mehrteilig aufgebaut sein, bspw. als Block aus Kunststoff oder Gummi, der mit einem Besatz aus Metall, bspw. Hartmetall versehen ist.

Das Abstreifelement ist um eine Schwenkachse schwenkbar angeordnet. Die Schwenkachse verläuft bevorzugt zumindest im Wesentlichen quer zur Laufrichtung des Gurts, also bspw. parallel zur Drehachse einer Umlenk- oder Abwurftrommel. Dabei ist das Abstreifelement schwenkbar so angeordnet, dass es durch eine Schwenkbewegung um die Schwenkachse vom Gurt abgehoben werden kann. So kann das Abstreifelement abschwenken, um Hindernisse am Gurt wie bspw. Gurtfehler oder Verdickungen passieren zu lassen.

Erfindungsgemäß liegt das Abstreifelement kraftbeaufschlagt, d.h. vorgespannt am Gurt an, d.h. auf das Abstreifelement wirkt ein Drehmoment um die Schwenkachse in Richtung auf die Anlageposition des Abstreifelements am Gurt. Zur Erzeugung des Drehmoments ist erfindungsgemäß mindestens ein Federelement vorgesehen, wobei bevorzugt mehrere Federelemente, bspw. mindestens je eines auf jeder Seite angeordnet sind. Das Federelement ist eine Schraubenfeder, eine Blattfeder, eine Torsionsfeder, eine Tellerfeder oder eine Blockfeder. Das Federelement kann in einer Federvorrichtung angeordnet sein, d.h. bspw. an einem Hebel oder anderem mechanischen Element angreifen, das mit dem Abstreifelement gekoppelt ist. Dabei kann das Federelement bspw. als Zug- oder Druckfeder wirken.

Im Betrieb liegt das Abstreifelement somit durch die Federwirkung vorgespannt an, kann aber entgegen der Federkraft elastisch abgeschwenkt werden. Beim Abschwenken und der anschließenden Rückstellung in die Abstreifposition ergibt sich somit ein variabler Schwenkwinkel.

Das Federelement kann auch mit mindestens einem Dämpfungselement gekoppelt sein, um eine gedämpfte Bewegung des Abstreifelements zu ermöglichen, um so eine besonders gute Anlage des Abstreifelements am Gurt zu gewährleisten. Im Fall der Verwendung einer Blockfeder, bspw. eines Blocks aus Gummi oder Elastomer als Druck- oder Zugfeder, können Dämpfungs- und Federeigenschaften in einem Element verwirklicht sein.

Möglich sind auch Kombinationen verschiedener Typen von Federelementen und/oder Dämpfungselementen, bspw. eine Kombination einer Schraubenfeder mit einer Blockfeder.

Erfindungsgemäß ist zur Ermittlung des jeweils aktuellen Schwenkwinkels des Abstreifelements ein Sensor vorgesehen. Der erfindungsgemäße Sensor arbeitet nach einem berührungslosen Messprinzip und umfasst zumindest einen Indexteil und einen Erfassungsteil, die relativ zueinander beweglich und bevorzugt voneinander völlig unabhängig sind. Der Erfassungsteil ist ausgelegt und geeignet zur Erfassung der Stellung des Indexteils relativ zum Erfassungsteil. Bevorzugt ist der Erfassungsteil zumindest dazu geeignet, den Abstand zum Indexteil zu erfassen, alternativ oder zusätzlich kann auch eine Erfassung der Ausrichtung, also bspw. Drehposition des Indexteils relativ zum Erfassungsteil erfolgen.

Entsprechend der Erfassung der Stellung des Indexteils kann der Sensor ein Signal liefern, bevorzugt als elektrisches Signal, bspw. analog als Strom- und/oder Spannungssignal sowie alternativ oder zusätzlich als Digitalsignal.

Die Erfassung des Indexteils kann nach einem beliebigen berührungslosen Sensorprinzip erfolgen, bspw. optisch (bspw. mittels Laser, Infrarot, etc.), akustisch (z. B. mittels Ultraschall), kapazitiv, induktiv, magnetisch, magneto-induktiv etc. Bevorzugt ist der Indexteil autark, d. h. erfordert außer einer mechanischen Anbringung keinen funktionalen Anschluss, insbesondere keinen elektrischen Anschluss. Während eine elektrische Versorgung bspw. über eine Batterie, einen Akkumulator oder drahtlose Zuführung elektrischer Leistung denkbar ist, erfordert der Indexteil bevorzugt keine Leistungsversorgung. Der Indexteil kann ein Feld und/oder eine Welle des für die Erfassung benutzten Mediums (z.B. optisch, magnetisch, elektrisch, akustisch) erzeugen oder modifizieren.

Bevorzugt kann der Indexteil des Sensors mindestens ein Magnetelement und der Erfassungsteil zumindest ein Magnetfeldsensorelement umfassen. Das Magnetelement kann bspw. ein Permanentmagnetelement sein. Das Magnetfeldsensorelement kann bspw. ein Hall-Sensorelement umfassen und/oder ein weichmagnetisches Element mit einer Spulenanordnung, insbesondere ein weichmagnetisches Element hoher Permeabilität.

Der Erfassungsteil ist ausgestattet mit Mitteln zur Erfassung der Stellung des Indexteils. Bevorzugt kann der Erfassungsteil eine elektrische Erfassungs- und Auswertungsschaltung aufweisen, die betrieben werden kann, um ein Sensorsignal abhängig von der Stellung des Indexteils zu erzeugen. Der Erfassungsteil kann ein elektrisches Anschlusskabel aufweisen, über das elektrische Versorgungsleistung zum Betrieb der elektrischen Schaltung zugeführt werden kann. Das elektrische Anschlusskabel kann alternativ oder zusätzlich auch zur Übermittlung eines elektrischen Sensorsignals dienen.

Erfindungsgemäß ist der Indexteil an einem mit dem Abstreifelement gekoppelten, beweglichen Element im Abstand von der Schwenkachse angeordnet, nämlich an einer Stange, die mit dem Abstreifelement mechanisch so gekoppelt ist, dass sie eine mit der Schwenkbewegung gekoppelte Bewegung ausführt. Der Indexteil ist somit im Abstand von der Schwenkachse so angeordnet, dass eine Schwenkbewegung des Abstreifelements eine hiermit gekoppelte Bewegung der Stange und damit des Indexteils hervorruft. So ist durch Erfassung der Lage des Indexteils ein Rückschluss auf die Schwenkbewegung des Abstreifelements möglich.

Besonders für ein autark ausgebildetes Indexteil bietet diese Konstruktion Vorteile, da bspw. kein elektrischer Anschluss bspw. per Kabel zum beweglichen Element geführt werden muss.

Die Anordnung des Indexteils im Abstand von der Schwenkachse ermöglicht einerseits eine vereinfachte Konstruktion, d.h. bspw. kann eine Gelenkkonstruktion unverändert bleiben und der Sensor außerhalb des Gelenks, bevorzugt in einem radialen Abstand zum Gelenk angeordnet werden. Andererseits führt die Schwenkbewegung im Abstand von der Schwenkachse auch zu einem größeren Hub, der durch einen Abstandssensor gut erfasst werden kann. Bspw. kann der Indexteil von der Schwenkachse einen Abstand aufweisen, der mindestens 5%, bevorzugt mindestens 20%, besonders bevorzugt 50% oder mehr des Abstandes der vordersten Kante des Abstreifelements von der Schwenkachse beträgt.

Erfindungsgemäß ist ein Schwenkarm vorgesehen, der sich von der Schwenkachse erstreckt und mit dem Abstreifelement gekoppelt ist. Der Schwenkarm ist bevorzugt starr zum Abstreifelement angeordnet, so dass er bei einer Schwenkbewegung des Abstreifelements um denselben Schwenkwinkel verschwenkt. Bevorzugt erstreckt sich der Schwenkarm in eine Richtung, die mit der Richtung des Abstreifelements einen stumpfen Winkel, d. h. einen Winkel von mehr als 90° bildet. Betrachtet wird dabei bzgl. des Schwenkarms die Richtung von der Schwenkachse zu dessen Ende und bzgl. des Abstreifelements die Richtung von der Schwenkachse zu dessen vorderer Kante. Diese sind bevorzugt zumindest im Wesentlichen gegenüberliegend angeordnet, so dass der dazwischen aufgespannte Winkel größer als 90° ist. Durch die gegenüberliegende Anordnung kann der Schwenkarm so angeordnet werden, dass sich ein vergrößerter Abstand vom Abstreifbereich ergibt.

Das Indexelement ist an einer an dem Schwenkarm angelenkten Stange angeordnet. Eine solche Stange kann bspw. als Zug- oder Schubstange ausgebildet sein, und dazu dienen, eine auf den Schwenkarm wirkende Kraft zu übertragen, mit der ein auf das Abstreifelement wirkendes Drehmoment erzeugt wird. Hierzu kann bspw. ein Federelement mit der Stange gekoppelt sein. Alternativ kann ein Federelement auch direkt mit dem Schwenkarm gekoppelt sein, um ein Drehmoment zu bewirken.

Erfindungsgemäß ist die Stange in einem umgebenden Gehäuse gegenüber diesem beweglich angeordnet, wobei der Erfassungsteil des Sensors am Gehäuse und der Indexteil an der Stange angeordnet ist. Bevorzugt kann das Gehäuse zylindrisch sein und sich die Stange darin in Längsrichtung bewegen. Weiter bevorzugt ist die vom Sensor erfasste Relativbewegung der Stange gegenüber dem Gehäuse zumindest im Wesentlichen eine Linearbewegung, die besonders einfach zu erfassen ist.

Der Sensor kann in axialer Richtung der Schwenkachse direkt am Abstreifelement oder in dessen Nähe angeordnet sein. Für manche Ausführungen kann es aber auch bevorzugt sein, das Abstreifelement und den Sensor in axialer Richtung der Schwenkachse im Abstand zueinander anzuordnen. Bspw. kann so der Sensor seitlich aus dem Gurtbereich entfernt angeordnet werden, so dass er nicht durch abgestreiftes Fördergut beeinträchtigt wird. Bspw. kann das Abstreifelement an einer drehbaren Welle angeordnet sein. Zumindest eine Lagerung kann vorgesehen sein, um die Welle drehbar zu lagern, bevorzugt sind zwei im Abstand voneinander angeordnete Lagerungen. In einer Ausführung kann der Sensor außerhalb angeordnet sein, also so, dass zumindest eine Lagerung axial zwischen dem Sensor und dem Abstreifelement angeordnet ist.

In einer Ausführungsform kann ein Träger vorgesehen sein, der sich bspw. in einer Querrichtung zur Laufrichtung des Gurts erstreckt, bevorzugt mindestens über die Gurtbreite. Der Träger kann bevorzugt stationär angeordnet sein. An dem Träger kann bevorzugt zumindest ein Fußteil eines Abstreifmoduls befestigt sein, bevorzugt sind mehrere Abstreifmodule an dem Träger vorgesehen. An dem Fußteil kann ein Gelenk angeordnet sein, in dem das Abstreifelement schwenkbar gelagert ist, bspw. an einem sich vom Gelenk in Richtung des Abstreifelements erstreckenden Abstreifelementeträger. Bevorzugt ist das Erfassungsteil am Träger befestigt. Wenn mehrere Abstreifermodule mit ihren Fußteilen am Träger angeordnet sind, kann bspw. nur ein Sensor mit einem Erfassungsteil an einem der Module vorgesehen sein, oder es können mehrere Sensoren vorgesehen sein, deren Erfassungsteile dann bevorzugt nebeneinander am Träger befestigt sind.

Es hat sich als günstig erwiesen, den Sensor so anzuordnen, dass in Laufrichtung des Gurts gesehen die Schwenkachse zwischen dem Sensor und dem Abstreifelement angeordnet ist. So wird der Sensor möglichst in einem Abstand vom Abstreifbereich angeordnet.

Nachfolgend werden Ausführungsformen der Erfindung anhand von Zeichnungen näher beschrieben. Dabei zeigen:
- Fig. 1: in perspektivischer Ansicht eine erste Ausführungsform eines Gurtabstreifers;
- Fig. 2: der Gurtabstreifer aus Fig. 1 in Seitenansicht;
- Fig. 3: eine vergrößerte Teilansicht der Darstellung aus Fig. 2;
- Fig. 4: der Gurtabstreifer aus Fig. 1 - 3 in Seitenansicht mit abgeschwenkten Abstreifelementen;
- Fig. 5: der Gurtabstreifer aus Fig. 1 - 4 in Seitenansicht nach eingetretenem Verschleiß;
- Fig. 6: in perspektivischer Ansicht eine Ausführung eines Gurtabstreifers mit einer Mehrzahl von Abstreifermodulen als Vergleichsbeispiel;
- Fig. 7: ein Abstreifermodul aus Fig. 6 in Seitenansicht;
- Fig. 8: das Abstreifermodul aus Fig. 6, 7 in Seitenansicht in verschiedenen Schwenkstellungen;
- Fig. 9: das Abstreifermodul aus Fig. 6 - 8 in Vorderansicht;
- Fig. 10: in schematischer Darstellung Elemente eines Sensors mit Indexteil und Erfassungsteil.

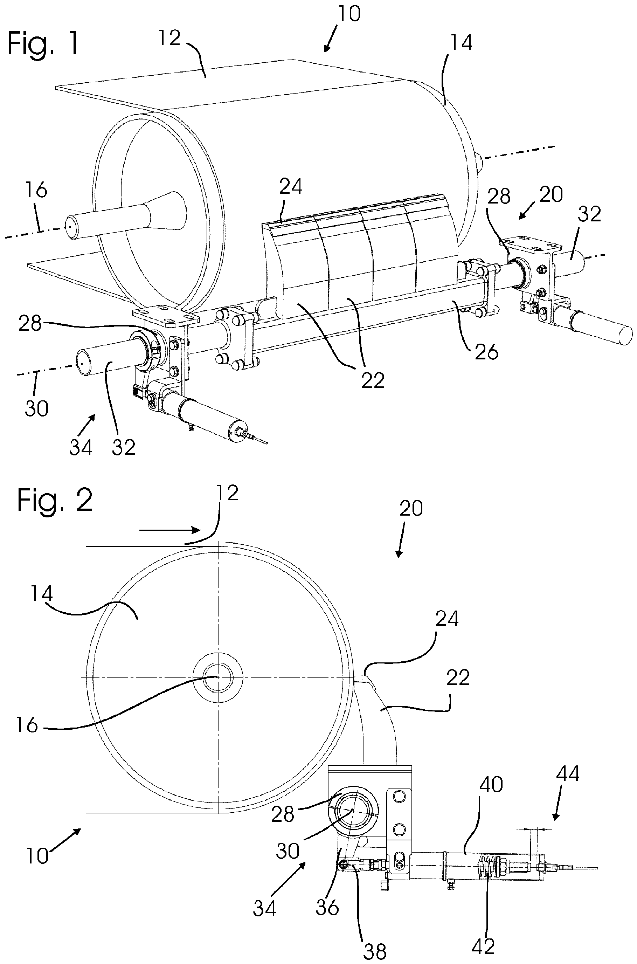

Fig. 1 zeigt einen Abschnitt einer Förderanlage 10 mit einem Fördergurt 12. Im Bereich einer Umlenk- und Abwurftrommel 14, die sich um eine Trommelachse 16 dreht, ist ein Gurtabstreifer 20 gemäß einer ersten Ausführungsform angeordnet.

Mittels des Gurtabstreifers wird Fördergut, das sich auf dem Gurt 12 befindet und zum Teil dort anhaftet, vom Gurt 12 abgestreift. Der Gurtabstreifer 20 ist dabei als Vorabstreifer eingesetzt, d. h. er befindet sich oberhalb eines Aufnahmebehälters bzw. einer Schurre (nicht dargestellt) zur Aufnahme des Förderguts.

Der Gurtabstreifer 20 weist mehrere in Querrichtung nebeneinander angeordnete Abstreifblöcke 22 auf. Die Abstreifblöcke 22 sind in der gezeigten Ausführungsform als massive Körper aus Kunststoff ausgebildet und am oberen Ende mit einer Kappe 24 aus Hartmetall versehen. Die Abstreifblöcke 22 stellen Abstreifelemente dar, die wie in Fig. 2 dargestellt an den Gurt 12 angelegt sind, so dass sie sich entlang eines flächen- oder linienförmigen Kontaktbereichs in Kontakt mit der Oberfläche des Gurts 12 befinden.

Die Abstreifblöcke 22 sind befestigt auf einem drehbaren Querträger 26, der sich zu beiden Seiten in Achselementen 32 fortsetzt, die in Lagern 28 so gelagert sind, dass die Abstreifblöcke 22 zusammen mit dem Querträger 26 durch Drehung der Achselemente 32 um eine Schwenkachse 30 schwenkbar angeordnet sind.

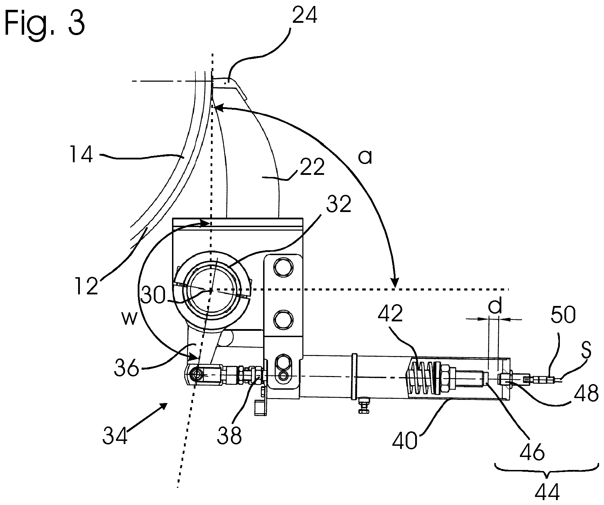

An den Lagerungen 28 für den Querträger 26 und die Achselemente 32 sind beidseits Federvorrichtungen 34 vorgesehen. Wie insbesondere aus Fig. 3 ersichtlich umfassen diese jeweils einen sich gerade von der Schwenkachse 30 erstreckenden Schwenkarm 36 und eine an dessen Ende angelenkte Federstange 38. Die Federstange 38 ist innerhalb eines zylindrischen Gehäuses 40 linear beweglich und wird dort in Längsrichtung von einer Druckfeder 42 auf Zug beaufschlagt. Über die Federstange 38 und den Schwenkarm 36 wird so die gesamte Anordnung der Abstreifblöcke 22 auf dem Querträger 26 mit einem Drehmoment entgegen der Drehrichtung der Trommel 14 beaufschlagt, so dass die Abstreifblöcke 22 mit einer Kraft auf die Oberfläche des Gurts 12 gedrückt werden.

Der Schwenkarm 36 ist starr zu den Abstreifblöcken 22 angeordnet und mit diesen gemeinsam um die Schwenkachse 30 verschwenkbar. Wie insbesondere aus Fig. 3 ersichtlich ist im dargestellten Beispiel der Schwenkarm 36 bzgl. der Schwenkachse 30 gegenüber den Abstreifblöcken 22 angeordnet, d. h. eine erste Richtung von der Schwenkachse 30 bis zur vorderen Kante der Anlagefläche der Abstreifblöcke 22 und eine zweite Richtung von der Achse 30 zum Anlenkpunkt der Federstange 38 am Ende des Schwenkarms 36 bilden einen stumpfen Winkel w. In alternativen Ausführungen können auch andere Anordnungen gewählt werden, bei denen sich ein anderer Winkel w ergibt, bspw. auch ein spitzer Winkel.

Das Gehäuse 40 der Federstange ist nicht vollständig stationär gegenüber dem Bandgerüst (nicht dargestellt) der Fördervorrichtung 10 angeordnet, sondern ist wie in Fig. 3 gezeigt relativ zu diesem angelenkt, so dass es eine Schwenkbewegung ausführen kann. Die Bewegung des Gehäuses 40 ist dabei über die Federstange 38, den Schwenkhebel 36 und den Querträger 26 mit der Bewegung der Abstreifelemente 26 gekoppelt. Die Kopplung ist jedoch so gestaltet, dass das Gehäuse 40 nur eine gegenüber einer Schwenkbewegung der Abstreifelement 26 deutlich verringerte Bewegung ausführt, nämlich eine Schwenkbewegung um einen deutlich geringeren Schwenkwinkel.

An der Federvorrichtung 34 ist ein Sensor 44 angeordnet, mit dem die Winkelstellung der Abstreifblöcke 22 ermittelt und als elektrisches Sensorsignal S ausgegeben werden kann. In Fig. 3 ist ein Schwenkwinkel a beispielhaft dargestellt zwischen einer ersten Richtung von der Schwenkachse 30 zur vorderen Kante der Anlagefläche des Abstreifblocks 22 am Gurt 14 (im Ursprungszustand des Abstreifblocks 22, wie später dargestellt verlagert sich die Anlagefläche bei Verschleiß) und einer zweiten Richtung, die hier als Referenz horizontal dargestellt ist.

Der Sensor 44 erfasst einen Abstand d zwischen einem Indexteil 46 am Ende der Federstange 38 und einem Erfassungsteil 48 das am Ende des zylindrischen Gehäuses 40 befestigt ist.

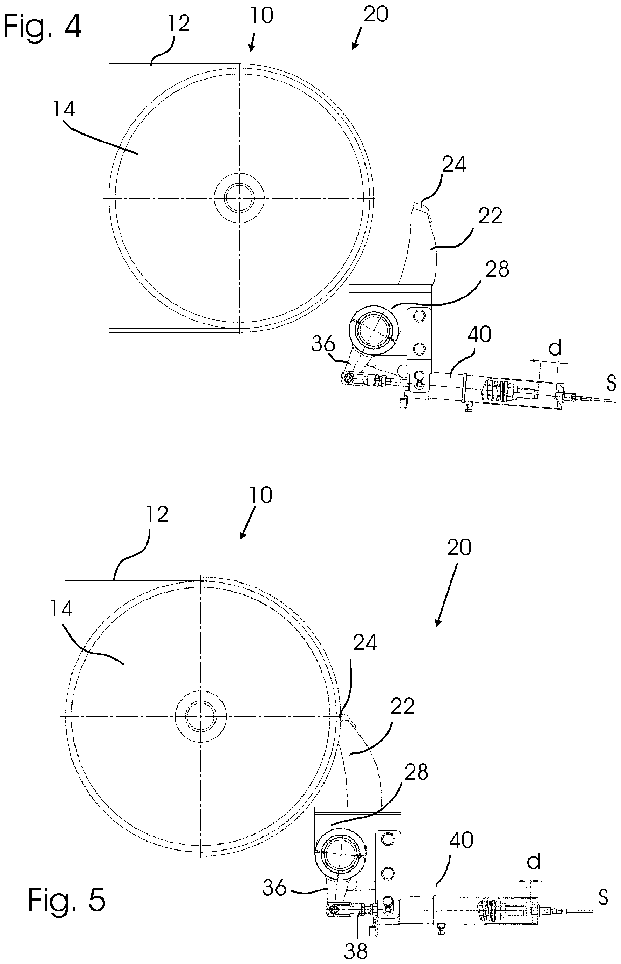

Der Abstand d hängt unmittelbar von der Winkelstellung a der Abstreifblöcke 22 ab. Bei einer Schwenkbewegung der Abstreifblöcke 22 in Richtung des Gurts 12, wie sie beispielsweise bei fortschreitendem Verschleiß erfolgt (Fig. 5), vergrößert sich der Winkel a. Über die Kopplung durch den Schwenkhebel 36 und die Stange 38 wird dadurch der Abstand d zwischen dem Ende der Stange 38 und dem Ende des Gehäuses 40 geringer, also auch der Abstand zwischen dem Indexteil 46 und dem Erfassungsteil 48 des Sensors 44. Der Zusammenhang zwischen a und d ist in dem gezeigten Winkelbereich, bei dem der Schwenkarm 36 und die Federstange 38 nahezu rechtwinklig zueinander angeordnet sind, fast linear. Bei einer gegenläufigen Schwenkbewegung, wenn die Abstreifblöcke 22 vom Gurt 12 wegschwenken, wird der Winkel a kleiner und der Abstand d vergrößert sich.

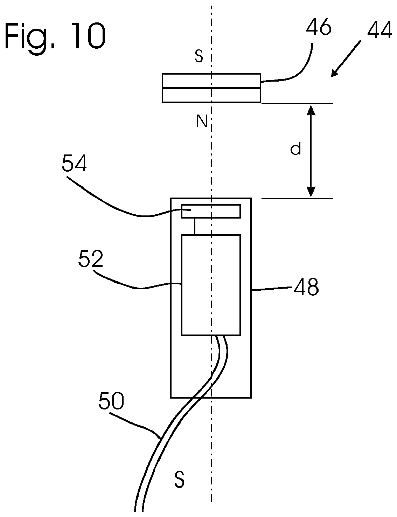

Fig. 10 zeigt schematisch den Aufbau des Sensors 44. In einer bevorzugten Ausführung wird ein magnetischer oder magneto-induktiver Sensor verwendet, bei dem der Indexteil 46 als scheibenförmiger Permanentmagnet ausgebildet ist, der in Richtung der Sensor-Längsachse magnetisiert ist.

Der Erfassungsteil 48 des Sensors ist im Abstand d vom Indexteil 46 angeordnet und umfasst in einem Sensorgehäuse ein Magnetfeldsensorelement 54 und daran angeschlossen eine elektrische Erfassungs- und Auswertungsschaltung 52. Die Erfassungs- und Auswertungsschaltung 52 wird durch eine elektrische Versorgung über einen Kabelanschluss 50 betrieben.

Abhängig vom Abstand d bewirkt der Permanentmagnet des Indexteils 46 ein unterschiedliches Magnetfeld am Ort des Magnetfeldsensorelements 54, so dass sich eine messbare physikalische Eigenschaft des Magnetfeldsensorelements 54 ändert.

Je nach Art des Sensors sind verschiedene Typen von Magnetfeldsensorelementen 54 einsetzbar. Bspw. kann als Magnetfeldsensorelement 54 ein Hall-Element eingesetzt werden, dessen Widerstand sich abhängig vom Magnetfeld ändert. Verwendbar ist auch ein weichmagnetisches Material, dessen Permeabilität sich abhängig vom Magnetfeld ändert, bspw. wie beschrieben in DE 10 2007 062 862 A1.

Die Erfassungs- und Auswertungsschaltung 52 betreibt das Magnetfeldsensorelement 54 wie für die Erfassung des Magnetfelds erforderlich, wertet dessen messbare Eigenschaften aus und setzt diese in ein Sensorsignal S um. Das Sensorsignal S wird als elektrisches Signal über den Kabelanschluss 50 ausgegeben, bspw. als Strom- oder Spannungssignal.

Das Sensorsignal S kann eindeutig dem Abstand d zugeordnet werden, wobei die Abhängigkeit innerhalb des möglichen Schwenkbereichs der Abstreifblöcke 22 bevorzugt zumindest im Wesentlichen linear ist.

Durch Auswertung des Sensorsignals S kann bspw. ein fortschreitender Verschleiß des Abstreifelements, hier der Abstreifblöcke 22 ermittelt werden. Wie in Fig. 5 beispielhaft dargestellt führt die ständige Anlage der Abstreifblöcke 22 am laufenden Gurt 12 zu einem Abrieb, so dass sich der Winkel a über die Betriebsdauer vergrößert. Dies wird durch eine Änderung des Sensorsignals S angezeigt, so dass eine Verschleißüberwachung ermöglicht wird, bei der eine Anzeige erfolgt, wenn die Abstreifblöcke 22 ersetzt werden müssen.

Der Sensor 44 ist am Abstreifer 20 wie bereits erläutert so angeordnet, dass der autarke Indexteil 46 an einem mit der Schwenkbewegung des Abstreifelements 24 synchron beweglichen Teil befestigt ist, nämlich der Stange 38. Der Erfassungsteil 48 ist an einem fast stationären Teil angebracht, das eine gegenüber der Bewegung des Abstreifelements 24 deutlich verringerte Bewegung ausführt, nämlich am Gehäuse 40 der Federeinheit 34. Auf diese Weise ist die Kabelführung erleichtert, da das Kabel 50 nur die geringfügige Bewegung des Gehäuses 40 ausgleichen muss.

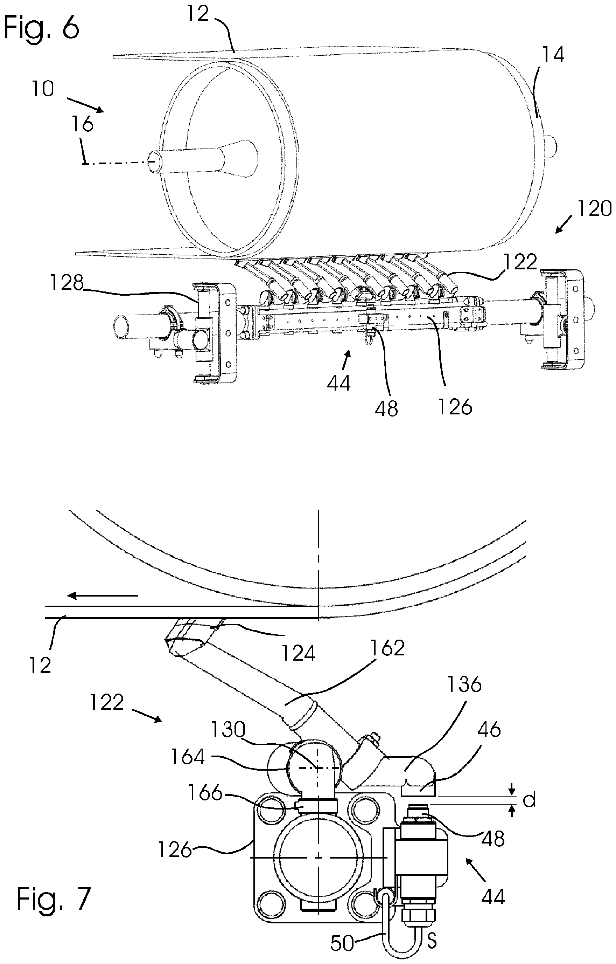

Nachfolgend wird eine Ausführung eines Abstreifers 120 als Vergleichsbeispiel im Hinblick auf die Darstellungen Fig. 6 - 9 beschrieben. Der Abstreifer 120 ist ebenfalls an einer Förderanlage 10 angebracht.

Der Abstreifer 120 weist einen stationären, höhenverstellbaren, aber nicht drehbaren Querträger (Systemträger) 126 auf, an dem nebeneinander mehrere Abstreifmodule 122 angeordnet sind. Bezüglich der Ausgestaltung und Anordnung der Abstreifmodule 122 wird Bezug genommen auf die detaillierte Darstellung in WO 2014/106621 A2.

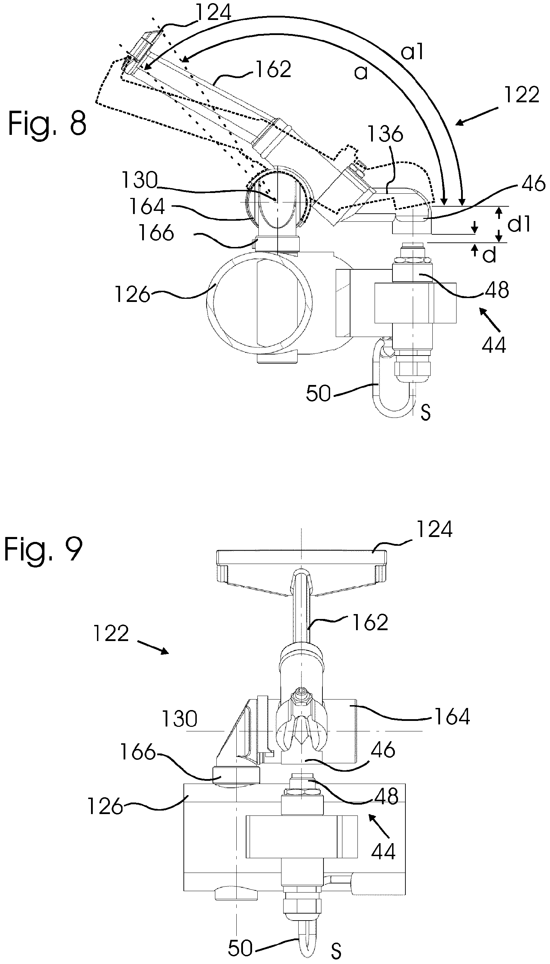

Eines der Abstreifmodule 122 ist in Fig. 7 in einer Seitenansicht entlang der Achse des Systemträgers 126, in Fig. 8 in Seitenansicht entlang einer Modul-Schwenkachse 130 und in Fig. 9 in Frontansicht dargestellt. Es umfasst eine zur schälenden Anlage an den Gurt 12 ausgebildete Hartmetall-Lamelle 124, die an einem Schneidenträger 162 befestigt ist, der in einem Gelenk 164 um die Modul-Schwenkachse 130 schwenkbar ist. Ein Fuß 166, der das Gelenk 164 trägt, ist im Systemträger 126 gelagert. Das Abstreifmodul 122 ist unter einem geringen Winkel gegenüber der Querrichtung schräggestellt, so dass die Modul-Schwenkachse 130 zwar horizontal ausgerichtet ist und im Wesentlichen quer zur Laufrichtung des Gurts 12 verläuft, aber nicht exakt der Längsachse des Systemträgers 162 entspricht.

Der Schneidenträger 162 und die daran befestigte Lamelle 124 ist wie in Fig. 8 angedeutet im Gelenk 164 um die Modul-Schwenkachse 130 schwenkbar angeordnet. Der Schwenkwinkel a kann bspw. definiert werden wie in Fig. 8 gezeigt zwischen einer Richtung von der Modul-Schwenkachse 130 zur vorderen Kante der Lamelle 124 und einer Horizontalen.

Innerhalb des Gelenks 164 wirkt eine Drehfeder (nicht dargestellt) so, dass der Schneidenträger 162 mit einem Drehmoment beaufschlagt wird, durch dass die Lamelle 124 in Richtung der Anlage am Gurt 12 gedrückt wird.

Eine vordere Kante der Lamelle 124 liegt auf der Oberfläche des Gurts 12 auf. Bei laufendem Gurt 12 wird so anhaftendes Fördergut abgestreift.

Ein Schwenkarm 136 ist starr zum Schneidenträger 162 so angebracht, dass er ebenfalls um die Modul-Schwenkachse 130 schwenkbar ist. Der Schwenkarm 136 ist in Verlängerung des Schneidenträgers 162 befestigt, im gezeigten Beispiel aufgeklemmt, so dass ein Verschwenken des Schneidenträgers 162 und der Lamelle 124 zu einer gleichen Schwenkbewegung des Schwenkarms 136 führt.

Ein Sensor 44 ist dazu angeordnet, den Schwenkwinkel a des Schneidenträgers 162 und der Lamelle 124 zu erfassen. Der Sensor 44 umfasst einen am Ende des Schwenkarms 136 angebrachten Indexteil 46 und einen am Systemträger 126 befestigten Erfassungsteil 48.

Der Sensor 44 ist derselbe Sensor wie zuvor im Hinblick auf Fig. 10 erläutert, d.h. mittels des Erfassungsteils 48 wird der Abstand d zum Indexteil 46 erfasst und als Sensorsignal S über den Kabelanschluss 50 ausgegeben.

Der Abstand d ist wie bspw. in Fig. 8 angedeutet abhängig von dem vom Schneidenträger 162 und der der Lamelle 124 eingenommenen Stellung, also vom Winkel a. Beim Abschwenken der Lamelle 124 von der Anlage am Gurt 12 (in Fig. 8 gestrichelt angedeutet), wie es im Fall von nicht abstreifbaren Hindernissen am Gurt 12 erfolgt, vergrößert sich der Winkel a im gezeigten Beispiel auf einen Wert a1 und damit der Abstand d auf einen größeren Wert d1.

Bei allmählichem Verschleiß der Lamelle 124 verringert sich der Winkel a und damit der Abstand d.

Im Sensorsignal S sind beide Situationen erkennbar, so dass wie im Zusammenhang mit der ersten Ausführungsform erläutert bspw. eine Verschleißüberwachung möglich ist.

Beim Vergleichsbeispiel der zweiten Ausführung ist der Erfassungsteil 48 an einem stationären Element, nämlich am Systemträger 126 angebracht, so dass eine einfache Kabelführung gewährleistet ist. Der Indexteil 46 ist an einem beweglichen Element, nämlich am Schwenkarm 136 angeordnet.

Der Schwenkarm 136 erstreckt sich bezüglich der Modul-Schwenkachse 130 in eine im Wesentlichen der Lamelle 124 entgegengesetzten Richtung, d.h. eine erste Richtung von der Modul-Schwenkachse 130 zur vorderen Kante der Lamelle 124 und eine zweite Richtung von der Modul-Schwenkachse 130 bis zum Indexteil 46 am Ende des Schwenkarms 136 bilden einen stumpfen Winkel. In Laufrichtung des Gurts 12 (Fig. 7) gesehen befindet sich das Gelenk 164 auf der Modul-Schwenkachse 130 zwischen dem Ende des Schwenkarms 136 und der Lamelle 164. Der Sensor 44 ist somit ausreichend weit entfernt von der Lamelle 124, so dass er nicht durch abgestreiftes Fördergut beeinträchtigt wird.

## Patentansprüche

1. Gurtabstreifer, mit
- einem Abstreifelement (22, 24, 124) zur Anlage an einen Gurt (12),
- wobei das Abstreifelement (22, 24, 124) schwenkbar angeordnet ist gegenüber einer Schwenkachse (30, 130),
- und wobei ein Sensor (44) zur Ermittlung eines Schwenkwinkels (a) des Abstreifelements (22, 24, 124) vorgesehen ist,
- wobei ein Schwenkarm (36, 136) vorgesehen ist, der sich von der Schwenkachse (30, 130) aus erstreckt und mit dem Abstreifelement (22, 24, 124) gekoppelt ist,
- wobei an dem Schwenkarm (36) eine Stange (38) angelenkt ist, wobei die Stange (38) in einem umgebenden Gehäuse (40) gegenüber diesem beweglich angeordnet ist.
**dadurch gekennzeichnet, dass**
- ein Federelement (42) ein Drehmoment auf das Abstreifelement (22, 24, 124) bewirkt, wobei das Federelement (42) eine Schraubenfeder, eine Blattfeder, eine Torsionsfeder, eine Tellerfeder oder eine Blockfeder ist,
- der Sensor (44) ein berührungsloser Sensor ist, der ein Indexteil (46) und ein Erfassungsteil (48) zur Erfassung der Stellung des Indexteils (46) relativ zum Erfassungsteil (48) aufweist,
- und der Indexteil (46) an der Stange (38) im Abstand von der Schwenkachse (30, 130) angeordnet ist und der Erfassungsteil (48) am Gehäuse (40) angebracht ist.

2. Gurtabstreifer nach Anspruch 1, bei dem
- der Indexteil (46) autark ist,
- und der Erfassungsteil (48) mit einem elektrischen Anschlusskabel (50) angeschlossen ist.

3. Gurtabstreifer nach Anspruch der vorangehenden Ansprüche, bei dem
- der Erfassungsteil (48) eine elektrische Erfassungs- und Auswertungsschaltung (52) aufweist,
- wobei das elektrische Anschlusskabel (50) zur elektrischen Versorgung der Erfassungs- und Auswertungsschaltung (52) angeschlossen ist und/oder zur Übermittlung eines elektrischen Signals (S) für die Stellung des Indexteils (46).

4. Gurtabstreifer nach einem der vorangehenden Ansprüche, bei dem
- der Schwenkarm (36, 136) sich von der Schwenkachse (30, 130) in eine Richtung erstreckt, die mit der Richtung des Abstreifelements (22, 24, 124) einen Winkel von mehr als 90° bildet.

5. Gurtabstreifer nach einem der vorangehenden Ansprüche, bei dem
- der Indexteil (46) zumindest ein Magnetelement umfasst,
- und der Erfassungsteil (48) zumindest ein Magnetfeldsensorelement (54) umfasst.

6. Gurtabstreifer nach einem der vorangehenden Ansprüche, bei dem
- das Abstreifelement (22, 24) und der Sensor (44) in axialer Richtung der Schwenkachse (30) im Abstand zueinander angeordnet sind.

7. Gurtabstreifer nach einem der vorangehenden Ansprüche, bei dem
- das Abstreifelement (22, 24) an einem Träger (26) angeordnet ist, der in einer Lagerung (28) drehbar gelagert ist,
- wobei die Lagerung (28) axial zwischen dem Sensor (44) und dem Abstreifelement (22, 24) angeordnet ist.

8. Gurtabstreifer nach einem der vorangehenden Ansprüche, bei dem
- ein Fußteil (166) an einem Querträger (126) befestigt ist,
- und an dem Fußteil (166) ein Gelenk (164) angeordnet ist, wobei das Abstreifelement (124) in dem Gelenk (164) schwenkbar gelagert ist,
- wobei der Erfassungsteil (48) am Querträger (126) befestigt ist.

9. Gurtabstreifer nach einem der vorangehenden Ansprüche, bei dem
- in Laufrichtung des Gurtes (12) gesehen die Schwenkachse (30, 130) zwischen dem Sensor (44) und dem Abstreifelement (22, 24, 124) angeordnet ist.

10. Verfahren zum Betrieb eines Gurtabstreifers, bei dem
- ein Abstreifelement (22, 24, 124) an einen Gurt (12) angelegt wird,
- wobei das Abstreifelement (22, 24, 124) schwenkbar angeordnet ist gegenüber einer Schwenkachse (30, 130),
- wobei ein Schwenkarm (36, 136) vorgesehen ist, der sich von der Schwenkachse (30, 130) aus erstreckt und mit dem Abstreifelement (22, 24, 124) gekoppelt ist,
- wobei an dem Schwenkarm (36) eine Stange (38) angelenkt ist, wobei die Stange (38) in einem umgebenden Gehäuse (40) gegenüber diesem beweglich angeordnet ist,
- und wobei ein Sensorsignal (S) zur Anzeige eines Schwenkwinkels (a) des Abstreifelements (22, 24, 124) erzeugt wird mittels eines Sensors (44),
**dadurch gekennzeichnet, dass**
- ein Federelement (42) ein Drehmoment auf das Abstreifelement (22, 24, 124) bewirkt, wobei das Federelement (42) eine Schraubenfeder, eine Blattfeder, eine Torsionsfeder, eine Tellerfeder oder eine Blockfeder ist,
- der Sensor (44) ein berührungsloser Sensor ist, der ein Indexteil (46) und ein Erfassungsteil (48) zur Erfassung der Stellung des Indexteils (46) relativ zum Erfassungsteil (48) aufweist,
- der Indexteil (46) an der Stange (38) im Abstand von der Schwenkachse (30, 130) angeordnet ist,
- und der Erfassungsteil (48) am Gehäuse (40) angebracht ist.

## Claims

1. Belt scraper, with
- a scraper element (22, 24, 124) for contact with a belt (12),
- wherein the scraper element (22, 24, 124) is pivotably arranged with respect to a pivot axis (30, 130),
- and wherein a sensor (44) is provided for determining a pivot angle (a) of the scraper element (22, 24, 124),
- wherein a pivot arm (36, 136) is provided extending from the pivot axis (30, 130) and coupled to the scraper element (22, 24, 124),
- wherein a rod (38) is hinged to the pivot arm (36), the rod (38) being movably arranged in a surrounding housing (40) relative thereto.
**characterised in that**
- a spring element (42) effects a torque on the scraper element (22, 24, 124), wherein the spring element (42) is a helical spring, a leaf spring, a torsion spring, a disc spring or a block spring,
- the sensor (44) is a non-contact sensor comprising an index part (46) and a detection part (48) for detecting the position of the index part (46) relative to the detection part (48),
- and the index part (46) is arranged on the rod (38) at a distance from the pivot axis (30, 130) and the detection part (48) is attached to the housing (40).

2. Belt scraper according to claim 1, in which
- the index part (46) is self-sufficient,
- and the detection part (48) is connected with an electrical connection cable (50).

3. Belt scraper according to claim of the preceding claims, in which
- the detection part (48) has an electrical detection and evaluation circuit (52),
- wherein the electrical connection cable (50) is connected to electrically supply the detection and evaluation circuit (52) and/or to transmit an electrical signal (S) for the position of the index part (46).

4. Belt scraper according to any one of the preceding claims, in which
- the pivot arm (36, 136) extends from the pivot axis (30, 130) in a direction which forms an angle of more than 90° with the direction of the scraper element (22, 24, 124).

5. Belt scraper according to any one of the preceding claims, wherein
- the index part (46) comprises at least one magnetic element,
- and the detection part (48) comprises at least one magnetic field sensor element (54).

6. Belt scraper according to any one of the preceding claims, in which
- the scraper element (22, 24) and the sensor (44) are spaced apart in the axial direction of the pivot axis (30).

7. Belt scraper according to any one of the preceding claims, in which
- the scraper element (22, 24) is arranged on a carrier (26) which is rotatably mounted in a bearing (28),
- wherein the bearing (28) is arranged axially between the sensor (44) and the scraper element (22, 24).

8. Belt scraper according to any one of the preceding claims, in which
- a foot part (166) is attached to a cross member (126),
- and a joint (164) is arranged on the foot part (166), wherein the scraper element (124) is pivotably mounted in the joint (164),
- wherein the detection part (48) is fixed to the cross member (126).

9. Belt scraper according to any one of the preceding claims, in which
- seen in the direction of travel of the belt (12), the pivot axis (30, 130) is arranged between the sensor (44) and the scraper element (22, 24, 124).

10. Method of operating a belt scraper in which
- a scraper element (22, 24, 124) is applied to a belt (12),
- wherein the scraper element (22, 24, 124) is pivotably arranged with respect to a pivot axis (30, 130),
- wherein a pivot arm (36, 136) is provided extending from the pivot axis (30, 130) and coupled to the scraper element (22, 24, 124),
- wherein a rod (38) is hinged to the pivot arm (36), the rod (38) being movably arranged in a surrounding housing (40) relative thereto,
- and wherein a sensor signal (S) for indicating a pivot angle (a) of the scraper element (22, 24, 124) is generated by means of a sensor (44),
**characterised in that**
- a spring element (42) effects a torque on the scraper element (22, 24, 124), wherein the spring element (42) is a helical spring, a leaf spring, a torsion spring, a disc spring or a block spring,
- the sensor (44) is a non-contact sensor comprising an index part (46) and a detection part (48) for detecting the position of the index part (46) relative to the detection part (48),
- the index part (46) is arranged on the rod (38) at a distance from the pivot axis (30, 130),
- and the detection part (48) is attached to the housing (40).

## Revendications

1. Racleur de courroie, avec
- un élément racleur (22, 24, 124) destiné à s'appliquer contre une courroie (12),
- dans lequel l'élément racleur (22, 24, 124) est disposé de manière pivotante par rapport à un axe de pivotement (30, 130),
- et dans lequel un capteur (44) est prévu pour déterminer un angle de pivotement (a) de l'élément racleur (22, 24, 124),
- dans lequel un bras pivotant (36, 136) s'étend à partir de l'axe de pivotement (30, 130) et est couplé à l'élément racleur (22, 24, 124),
- dans lequel une tige (38) est articulée au bras pivotant (36), la tige (38) étant disposée de manière mobile dans un boîtier environnant (40) par rapport à celui-ci.
**se caractérise par le fait que**
- un élément ressort (42) exerce un couple sur l'élément racleur (22, 24, 124), l'élément ressort (42) étant un ressort hélicoïdal, un ressort à lames, un ressort de torsion, un ressort à disque ou un ressort à bloc,
- le capteur (44) est un capteur sans contact comprenant une partie index (46) et une partie détection (48) pour détecter la position de la partie index (46) par rapport à la partie détection (48),
- et la partie index (46) est disposée sur la tige (38) à une certaine distance de l'axe de pivotement (30, 130) et la partie détection (48) est fixée au boîtier (40).

2. Racleur de courroie selon la revendication 1, dans lequel
- la partie index (46) est autonome,
- et la partie de détection (48) est reliée à un câble de connexion électrique (50).

3. Racleur de courroie selon l'une des revendications précédentes, dans lequel
- la partie détection (48) comporte un circuit électrique de détection et d'évaluation (52),
- le câble de connexion électrique (50) est connecté pour alimenter électriquement le circuit de détection et d'évaluation (52) et/ou pour transmettre un signal électrique (S) pour la position de la partie indexée (46).

4. Racleur de courroie selon l'une quelconque des revendications précédentes, dans lequel
- le bras pivotant (36, 136) s'étend à partir de l'axe de pivotement (30, 130) dans une direction formant un angle supérieur à 90° avec la direction de l'élément racleur (22, 24, 124).

5. Racleur de courroie selon l'une quelconque des revendications précédentes, dans lequel
- la partie index (46) comprend au moins un élément magnétique,
- et la partie de détection (48) comprend au moins un élément de détection de champ magnétique (54).

6. Racleur de courroie selon l'une quelconque des revendications précédentes, dans lequel
- l'élément racleur (22, 24) et le capteur (44) sont espacés dans la direction axiale de l'axe de pivotement (30).

7. Racleur de courroie selon l'une quelconque des revendications précédentes, dans lequel
- l'élément racleur (22, 24) est disposé sur un support (26) qui est monté rotatif dans un palier (28),
- dans lequel le palier (28) est disposé axialement entre le capteur (44) et l'élément racleur (22, 24).

8. Racleur de courroie selon l'une quelconque des revendications précédentes, dans lequel
- une partie de pied (166) est fixé à une traverse (126),
- et une articulation (164) est disposée sur la partie du pied (166), dans laquelle l'élément racleur (124) est monté pivotant dans l'articulation (164),
- dans lequel la partie de détection (48) est fixée à la traverse (126).

9. Racleur de courroie selon l'une quelconque des revendications précédentes, dans lequel
- vu dans le sens de la déplacement de la courroie (12), l'axe de pivotement (30, 130) est disposé entre le capteur (44) et l'élément racleur (22, 24, 124).

10. Procédé de fonctionnement d'un racleur à courroie dans laquelle
- un élément racleur (22, 24, 124) est appliqué contre une courroie (12),
- dans lequel l'élément racleur (22, 24, 124) est disposé de manière pivotante par rapport à un axe de pivotement (30, 130),
- dans lequel un bras pivotant (36, 136) s'étend à partir de l'axe de pivotement (30, 130) et est couplé à l'élément racleur (22, 24, 124),
- dans lequel une tige (38) est articulée au bras pivotant (36), la tige (38) étant disposée de manière mobile dans un boîtier environnant (40) par rapport à celui-ci,
- et dans lequel un signal de capteur (S) indiquant un angle de pivotement (a) de l'élément racleur (22, 24, 124) est généré au moyen d'un capteur (44),
**se caractérise par le fait que**
- un élément à ressort (42) exerce un couple sur l'élément racleur (22, 24, 124), l'élément à ressort (42) étant un ressort hélicoïdal, un ressort à lames, un ressort de torsion, un ressort à disque ou un ressort à bloc,
- le capteur (44) est un capteur sans contact comprenant une partie index (46) et une partie détection (48) pour détecter la position de la partie index (46) par rapport à la partie détection (48),
- la partie index (46) est disposée sur la tige (38) à une certaine distance de l'axe de pivotement (30, 130),
- et la partie de détection (48) est fixée au boîtier (40).
